# EUROPEAN PATENT SPECIFICATION

(11) **EP 2 762 758 B1**
(45) Date of publication and mention of the grant of the patent: **10.05.2017**
(21) Application number: 14153466.9
(22) Date of filing: 31.01.2014
(51) Int. Cl.: F16J 15/34

(54) **Mechanical seal device, particularly for drive shafts in vessels, watercrafts or the like**
Mechanische Dichtungsvorrichtung, insbesondere für Antriebswellen in Schiffen, Wasserfahrzeugen und dergleichen
Dispositif mécanique d'étanchéité, en particulier pour des arbres d'entraînement dans des bateaux, des navires ou analogue

(30) Priority: 01.02.2013 IT GE20130015
(43) Date of publication of application: 06.08.2014
(73) Proprietor: Microtem di Mattia Chiodetti e Savino Larocca SNC, 19136 La Spezia (SP) (IT)
(72) Inventor: Chiodetti, Mattia, I-54010 Podenzana (MS) (IT); Valenti, Luca, I-19123 La Spezia (SP) (IT)
(74) Representative: Ausserer, Anton

(56) References cited:
- EP-A1- 0 021 243
- GB-A- 1 256 549
- GB-A- 2 057 597
- US-A- 3 547 452
- US-A- 3 632 120
- US-A- 4 413 830

## Description

Mechanical seal device, particularly for drive shafts in vessels, watercrafts or the like.

The present invention relates to a mechanical seal device for a drive shaft extending through an opening in the hull of a vessel, a watercraft or the like, said device being adapted to prevent leakage of water into said hull through said opening, said drive shaft being rotatable about an axis of rotation that coincides with its longitudinal axis.

Such device comprises a stationary part couplable to said hull and a rotary part, rotatably coupled to said stationary part and integrally connected to said drive shaft, the stationary part and the rotary part being provided with a stationary annular sliding element and a rotary annular sliding element respectively, which annular sliding elements are each provided with a flat contact face, and the two contact faces being in coplanar relationship and in contact with each other.

Such devices are known and used for isolating the inside of a watercraft from water in the region where the drive shaft exits out from the hull, see for example US 3 547 452 A.

The stationary part is secured to the inner wall of the hull around the opening, while the rotary part is coupled to the drive shaft, typically by coupling it by means of grub screws or dowels.

Inside the device, the annular sliding elements guarantee the sealing effect and the relative rotation between the two parts by means of the flat contact surfaces that slide one on each other.

In known devices there are often drawbacks as regards radial and/or angular misalignments between the drive shaft and the opening in the hull.

In this case the annular sliding elements can be subjected to movements and inclinations that can cause the contact between the flat surfaces to lose homogeneity, with the possibility of generating local overloading in a region and separations in an opposite region.

A similar situation can be caused by relative vibrations between the drive shaft and the wall of the hull.

Eventually these situations can lead to a deterioration of the annular sliding elements, with the possibility of leakages or breaking.

Mechanical seal devices are known wherein an annular sliding element, typically the stationary one, is urged by a set of springs towards the opposite annular sliding element such to guarantee the compression.

However, such devices do not guarantee a good compensation for misalignments and vibrations mentioned above.

Known devices further have drawbacks as regards the corrosion of the suspension biasing means due to their long exposure to sea water.

Therefore, there is the need not satisfied by currently known devices to protect the biasing means against the attack of sea water.

The known mechanical seal devices moreover have the drawback of being considerably complex in the assembling step, and this results in the need of highly specialized workers able to properly assemble the components of the device.

This is clearer in the case of the positioning of the annular sliding elements, which have to be mounted in such a manner to prevent them from being excessively mutually urged or on the contrary to prevent them from being insufficiently urged which may result in separations.

If the urging action is excessive friction and also consumptions and temperature will increase, with the risk of breaking, if on the contrary the urging action is not enough the mechanical seal may fail, for example because water flows between the flat contact surfaces of the annular sliding elements.

The invention aims at overcoming said drawbacks of the known devices by a device in accordance with the independent claims. Preferred embodiments of the invention are described in the dependent claims.

According to claim 1, both said stationary part and said rotary part are provided with biasing means urging said stationary annular sliding element and said rotary annular sliding element respectively towards each other.

Therefore the annular sliding elements are compressed together by means of urging biasing means that act in the same direction but in an opposite way by urging the stationary annular sliding element towards the rotary annular sliding element and vice versa.

This allows the annular sliding elements to be placed in contact with each other in a balanced position and to remain in contact even in case of misalignments or vibrations by acting as a suspension, avoiding overloading or separations.

According to one embodiment said biasing means are composed of one or more springs.

In one preferred embodiment said one or more springs are equi-angularly spaced apart with respect to said axis of rotation.

This allows each annular sliding element to be urged as homogeneously as possible throughout the whole angular extension. Said biasing means are contained into water-tight chambers formed by at least two sealing rings for each annular sliding element.

Due to such double sealing ring system, the biasing means are completely isolated from sea water.

According to one embodiment said at least two sealing rings are arranged so as to generate an elastic damping system.

This is particularly advantageous in order to compensate above all for the repetitive movements caused by vibrations that are generated between the drive shaft and the hull.

In combination with the above mentioned characteristic of providing urging biasing means both on the rotary annular sliding element and on the stationary annular sliding element, this arrangement allows damping to be increased and it allows possible overloading or separations to be avoided to a greater extent.

In a preferred embodiment each annular sliding element has a step-like radial enlargement, such that a cylindrical section having a smaller radius is connected to a cylindrical section having a greater radius by means of a connecting surface lying on a plane substantially perpendicular to the axis of rotation.

The inner walls of said stationary part and of said rotary part have a profile that mate with that of the annular sliding element, with a cylindrical section having a greater radius and a cylindrical section having a smaller radius connected by a connecting surface.

The biasing means are composed of one or more springs housed in one or more seats formed in said connecting surface of the stationary part and of the rotary part, said seats extending parallel to the axis of rotation, said springs being engaged with the connecting surface of the annular sliding element.

Two sealing rings are provided for each annular sliding element, in the section with the smaller radius and in the section with the greater radius respectively, which have a sealing effect on the section with the greater radius and the section with the smaller radius respectively of the stationary part and the rotary part.

Thus the two sealing rings generate a water-tight chamber for each annular sliding element wherein the springs are arranged, allowing the annular elements to move to the extent necessary for the action of the springs and contemporaneously guaranteeing the springs to take such a position to act in the most effective urging direction, that is the one parallel to the axis of rotation.

In an embodiment, the said sealing rings are positioned in dedicated grooves provided in each annular sliding element.

This configuration prevent them to move freely between the annular sliding element and the stationary or the rotating part.

The above described features allow the sealing rings both to have a sealing effect and to support the annular sliding elements, having a damping effect.

This allows an improved resistance to impacts and vibration, prolonging the operative lasting of the device.

The mechanical seal device is therefore able to compensate for the annular sliding elements all the possible structural movements or modifications, even of wide angular value, that intervene between the drive shaft and the hull of the watercraft. One or more calibrating pins are provided, which are insertable into one or more threaded seats provided in said stationary part and/or in said rotary part, which pins, in their coupled condition, project for a predetermined length and are fitted into corresponding seats formed into said rotary annular sliding element and/or in said stationary annular sliding element such that said calibrating pins act as limit stops for the movements of said rotary annular sliding element toward said rotary part and/or of said stationary annular sliding element toward said stationary part respectively.

The calibrating pins can be provided only in the stationary part or only in the rotary part. Advantageously the calibrating pins are present both in the stationary part and in the rotary part, to operate as limit stops both for the movements of the rotary annular sliding element toward the rotary part and of said stationary annular sliding element toward the stationary part.

The provision of the calibrating pins forces the annular sliding elements to be mounted in the proper position, avoiding wrong positions and by actually making the assembly or generally the maintenance of the mechanical seal device accessible to non-specialized workers.

This is particularly advantageous in combination with said provision of urging biasing means both on the rotary annular sliding element and on the stationary annular sliding element, since the provision of such biasing means on both the annular sliding elements increase the difficulty of a proper positioning.

The calibrating pins are adjustable, so that they can be introduced into said threaded seats so to project to a predetermined length.

This allows to choose the correct limit stop for each calibrating pin.

The calibrating pins allow the annular sliding elements not to rotate inside their housings in the stationary and rotating part respectively.

In case of an impact, the mechanical stops that the calibrating pins provide, guarantee that the annular sliding element cannot retreat to the maximum compression limit of the springs, which could otherwise provoke the permanent deformation of the springs, with the consequent incapability of acquiring again the initial correct position.

The distance between the calibrating pins and the annular sliding element is set during the mounting of the device by an operator and is related to the dimensions of the device and of the calibrating pins.

A further critical aspect in known devices is the contact of said stationary part with the inner wall of the hull, and its sealing effect against water flowing into the device through said opening.

Such sealing effect generally is guaranteed by a sealing ring provided at the bottom of said stationary part, which comes in contact with the wall of the hull.

However in case of replacements or repairs the wall of the hull may not be perfectly flat, causing said sealing ring to be not enough for the sealing effect and causing leakage.

The present invention aims at overcoming such drawback and therefore it further relates to a device according to claim 8 , wherein said stationary part is provided with an annular groove, open toward the surface of said stationary part that bears against the inner wall of the hull and means for filling said annular groove with liquid and solidifiable seal material.

Thus it is possible to fill said annular groove with said liquid material, which material will perfectly adhere against the wall of the hull, regardless of any lack of planarity or any surface defect thereof.

Once the annular groove is filled, the seal material solidifies, guaranteeing the sealing effect against water. Said means filling said groove comprise a hole for the injection of said seal material and an air vent hole, which holes extend from said annular groove and go into in the sidewall of said stationary part.

Thus it is possible to place said stationary part in the final position coupled to the wall of the hull and to fill the annular groove with the liquid seal material, by injecting it inside said injection hole. Contemporaneously to the injection of the seal material, the air provided inside the annular groove progressively begins to be discharged through the vent hole. Finally, the leakage of the liquid seal material from the air vent hole denotes that the whole annular groove has been filled, and it is possible to stop the injection and to wait for the solidification.

A further critical aspect of the currently known devices is the friction between the flat contact surfaces between the two annular sliding elements.

Such friction is generally decreased by providing a thin film of water between the two contact flat surfaces, which water comes from the inner cavity of the device, which is filled with water.

If a sufficient water change is not guaranteed, however, the lubricating and cooling action of such water film can be inadequate, with the risk of overheating.

The present invention aims at overcoming such drawbacks of the known devices further relating to a device according to claim 9, wherein said rotary part is provided with circulation means for the water flowing into the device.

Thus water change is guaranteed, avoiding the risk of increasing friction.

According to a preferred embodiment, said rotary part is provided with a seal intended to contact said drive shaft for preventing water from leaking along said drive shaft in a direction opposite to the opening in the hull.

Said circulation means are composed of a plurality of axial slots or recesses provided in the inner wall of said rotary part, in the area extending from said seal towards the opening of the hull.

The inner part of the device is designed to be accessed by the sea water through the opening of the hull.

The water contacts the inner wall of the stationary part and the inner wall of the rotary part only in the portion facing the stationary part and limited by the seal contacting the drive shaft.

The axial slots or recesses are provided in this portion, and they provide water recirculation between the seal device and the drive shaft for the cooling of the annular sliding elements.

The better heat exchange guaranteed by the water circularion slots provides a lower wear of the annular sliding elements.

The presence of said axial slots or recesses form therefore a pumping ring that uses the rotation of the rotary part for causing the water to flow inside the device.

An openable and closable through hole is provided in the rotary part to allow the operator to expel all the air from the inner part of the seal device and to check if such inner part is properly filled only with water.

Known devices have the further drawback of not guaranteeing the rotation of the drive shaft in case of non extremely serious damages.

A currently known security system, for example, provides to use a system provided with an air chamber, interposed between the stationary part and the wall of the hull, which generates a barrier that completely isolate the device from water by inflating the air chamber around the drive shaft.

Therefore, in case of damage, such security system allows the device to be water-sealed, but it prevents the shaft from rotating, and therefore it makes it necessary for the vessel to be towed.

The present invention aims at overcoming such drawback by relating to a device according to claim 10, wherein said rotary part is surrounded by a centering sleeve removably couplable to the stationary part, such that said centering sleeve, in the condition coupled to the stationary part, becomes integral therewith, whereas the rotary part is rotatable within said centering sleeve.

Thus said rim, by becoming integral with the stationary part, is a further sealing element, that allows, in case of damages, leakages to be avoided while guaranteeing the possibility of rotating the drive shaft, even if at a low number of revolutions, which are anyway sufficient for the vessel in order to autonomously come back to the port for being repaired.

According to one embodiment said centering sleeve is provided with one or more threaded seats with one or more grub screws or dowels fitted therein, one or more corresponding seats for receiving, said grub screws or dowels being provided in said stationary part.

This allows for a proper coupling of the centering sleeve with the stationary part.

The centering sleeve is alternatively removably couplable to the rotary part and it has one or more threaded seats with one or more grub screws fitted therein, one or more corresponding seats for receiving said grub screws being provided in the rotary part.

Between the centering sleeve and the rotary part there is provided a seal, which seals when the centering sleeve is coupled with the stationary part.

In normal operative condition the centering sleeve is coupled to the rotary part, and therefore rotates together with the rotary part.

In case of a damage, for example a leakeage between the two annular sliding elements, the centering sleeve is decoupled from the rotary part and coupled to the stationary part.

In this way the centering sleeve acts as sealing element, the rotary part is free to rotate inside the centering sleeve and the sealing effect is guaranteed by the seal of the centering sleeve, which seal contacts rubbing the rotating rotary part.

These and other characteristics and advantages of the present invention will be clearer from the following description of some embodiments shown in the annexed drawings wherein:
Figs. 1, 2 and 3 are different sectional views;
Fig.4 is a top view;
Fig.5 is a detail of the sectional view of Fig.1;

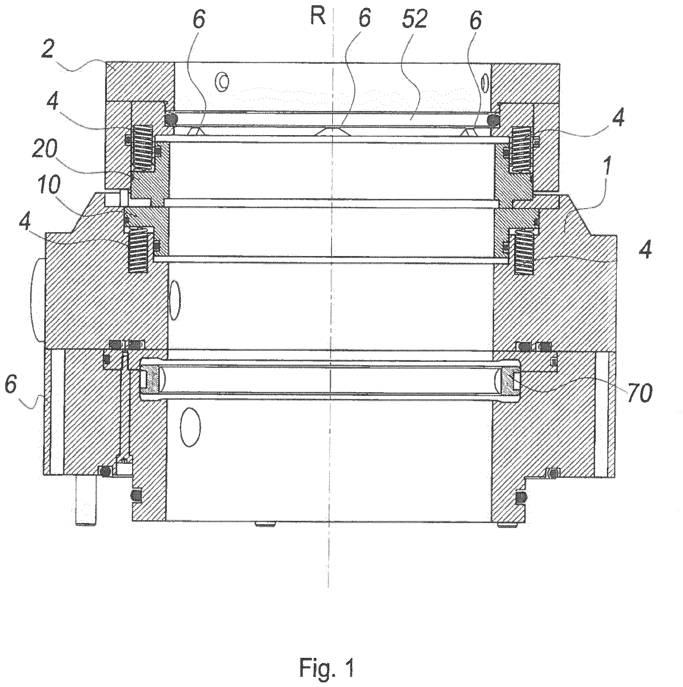

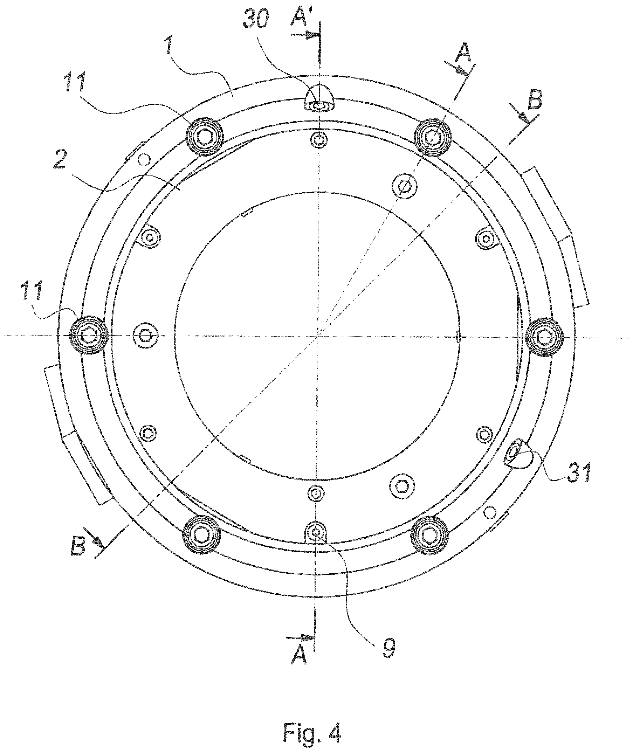

Figure 1 shows a sectional view of the mechanical seal device of the present invention. The section is taken along planes A-A of figure 4.

The device comprises a stationary part 1 couplable to the inner wall of the hull of the watercraft and a rotary part 2, rotatably coupled to the stationary part 1 and integrally connected to the drive shaft, not shown in the figures.

The rotary part is rotatable about an axis of rotation R that coincides with the longitudinal axis of the drive shaft.

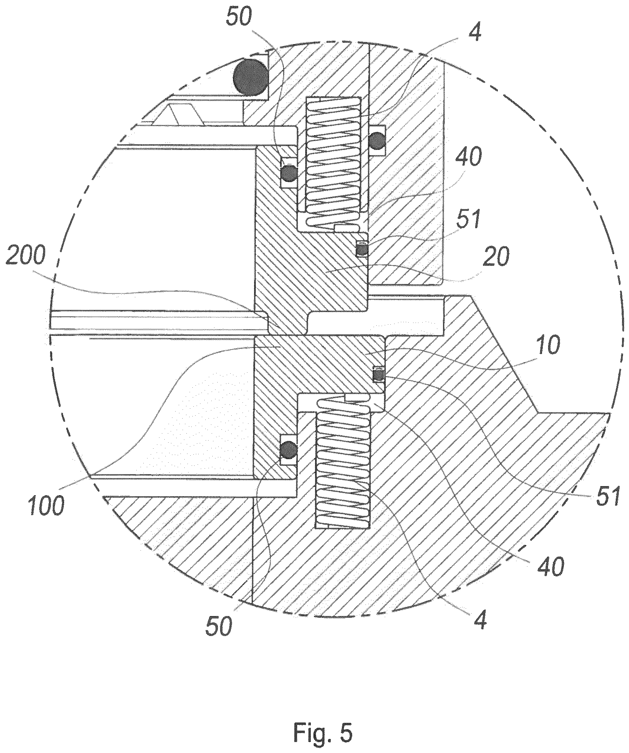

The stationary part 1 and the rotary part 2 are provided with a stationary annular sliding element 10 and a rotary annular sliding element 20 respectively, which annular sliding elements 10 and 20 are each provided with a flat contact face 100 and 200, the two contact faces 100 and 200, seen in greater detail in figure 5, are in coplanar relationship and in contact with each other.

The stationary part 1 is secured to the inner wall of the hull, while the rotary part is coupled to the drive shaft by coupling it by means of dowels.

The annular sliding elements 10 and 20 are composed of any material that can guarantee their wear resistance and a low friction, preferably graphite and silicon carbide.

The stationary part 1 and the rotary part 2, on the contrary, have to guarantee the highest mechanical strength and therefore they are preferably made of metal, particularly bronze.

Both the stationary part 1 and the rotary part 2 are provided with biasing means for urging the stationary annular sliding element 10 and the rotary annular sliding element 20 respectively towards each other.

Such biasing means can be of any type, and preferably they are composed of a plurality of springs 4 equi-angularly spaced apart, with respect to the axis of rotation R.

Between the flat contact surfaces 100 and 200 there is provided a thin film of water coming from the inner cavity of the device, which is filled with water.

The rotary part 2 is provided with water circulation means, such to guarantee the continuous recirculation, avoiding the risk of increasing friction.

The rotary part 2 is provided with a seal 52 which is designed to contact the drive shaft for preventing leakage of water along said drive shaft in a direction opposite to the opening in the hull.

The circulation means preferably are composed of a plurality of axial slots or recesses 6 provided in the inner wall of the rotary part 2, in the area that extends from the seal 52 toward the opening of the hull, that is in the direction of the stationary part 1.

Figure 1 further shows the currently known security system 7 provided with an air chamber 70, inserted between the stationary part 1 and the wall of the hull.

By inflating the air chamber 70 about the drive shaft a barrier is generated which completely isolates the device from water.

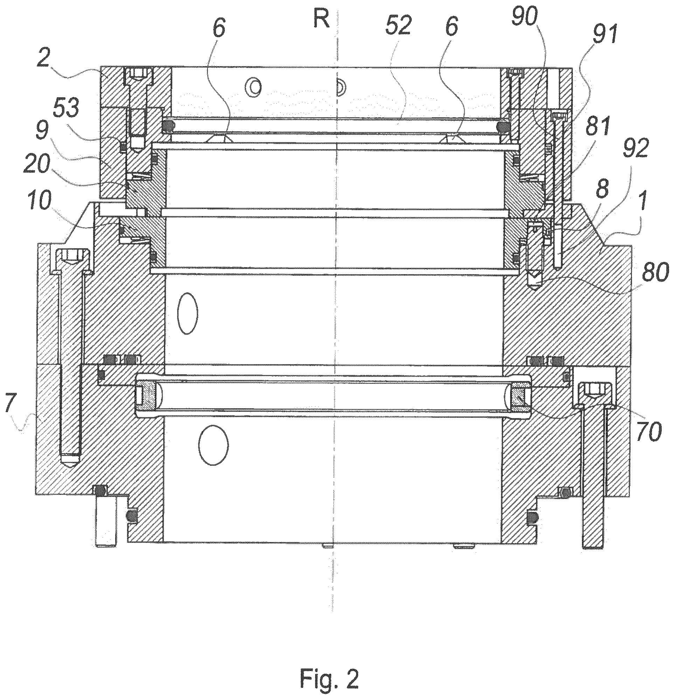

Figure 2 shows a different section of the device, according to plane B-B of figure 4.

In the figure there is shown a calibrating pin 8 that forces the annular stationary sliding element 10 to be mounted in the proper position.

The calibrating pin 8 is insertable into a threaded seat 80 provided in the stationary part 1 and in the coupled condition it projects to a predetermined length and it is fitted into a corresponding seat 81 formed in the rotary annular sliding element 20.

Thus the calibrating pin 8 acts as a limit stop for the movements of the rotary annular sliding element 10 toward the stationary part 1.

The calibrating pin 8 has a threaded part with such a size that in the screwed condition it projects from the threaded seat by a predetermined length.

Between the threaded part and the head inserting into the seat of the stationary annular sliding element 10 the calibrating pin has a radially enlarged portion enabling the abutment for the movements of the sliding annular element.

It is possible to provide a plurality of calibrating pins 8, both for the stationary annular sliding element 10 and for the rotary one 20, preferably equi-angularly spaced apart with respect to the axis of rotation R.

The rotary part comprises a centering sleeve 9 removably couplable to the stationary part 1.

Such centering sleeve 9, in the condition coupled to the stationary part 1, becomes integral therewith, whereas the rotary part 2 is rotatable within said centering sleeve 9.

The centering sleeve 9 has a plurality of threaded seats 91 with a plurality of grub screws or dowels 90 fitted therein, a plurality of corresponding seats 92 for receiving said grub screws or dowels 90 being provided in said stationary part 1.

Between the centering sleeve 9 and the rotary part there is provided a seal 53, which seals when the centering sleeve 9 is coupled with the stationary part 1.

The operator receives the mechanical seal device with its centering sleeve coupled by means of the grub screws 90 to the stationary part 1.

Once the stationary part 1 is coupled to the hull and the rotary part 2 is coupled to the drive shaft by means of grub screws, the operator can retract the centering sleeve coupling it to rotary part 2 by means of the closing cap of the rotary part 2.

The centering sleeve 9 in thus integrally coupled to the rotary part 2.

This configuration allows that the operator does not need to carry out calculations or measurements to install the seal device, so that possible errors in installation are reduced.

In case of a damage, for example a leakeage between the two annular sliding elements 10 and 20, the centering sleeve 9 is decoupled from the rotary part 2 and coupled to the stationary part 1.

The centering sleeve 9 acts as sealing element, the rotary part 2 is free to rotate inside the centering sleeve 9 and the sealing effect is guaranteed by the seal 53 of the centering sleeve, which seal contacts rubbing the rotating rotary part.

A planar sealing ring, not shown in figures, can be provided in the contact surface of the centering sleeve 9 facing the stationary part 1 and/or in the contact surface of the stationary part 1 facing the centering sleeve 9. In this case an improved sealing effect is provided by the centering sleeve 9 when it is coupled to the stationary part 1.

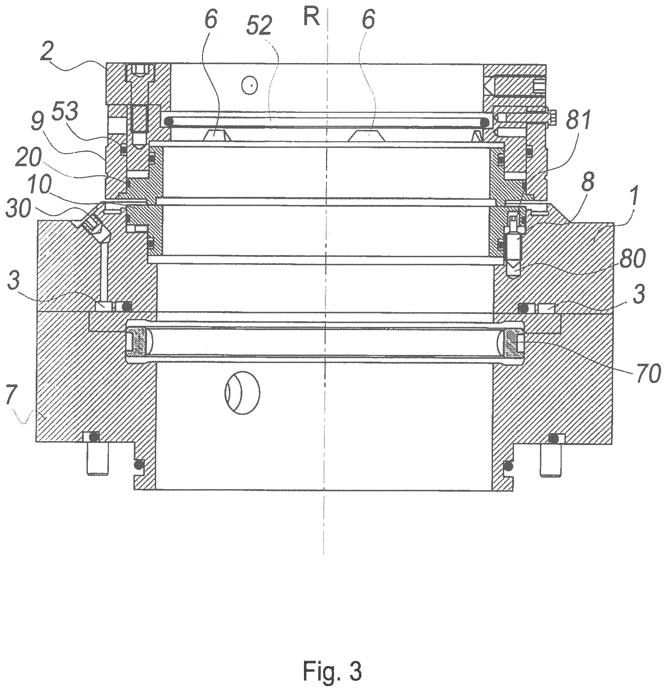

Figure 3 shows a further sectional view taken according to the plane A-A' of figure 4.

As it can be seen in the figure, the stationary part 1 has an annular groove 3 which is open toward the surface of said stationary part 1 that bears against the inner wall of the hull, and means for filling said annular groove 3 with liquid and solidifiable seal material.

The means for filling said groove 3 comprise an injection hole 30 for the seal material and an air vent hole 31, which holes extend from the annular groove 3 and go into the sidewall of the stationary part 1.

The injection hole 30 is visible in figure 3, while the air vent hole 31 is visible only in figure 4.

Figure 4 shows a top view of the device, wherein the stationary part 1 and the rotary part 2 can be seen.

The stationary part is secured to the wall of the hull or to the security system 7 by means of screws 11.

Figure 5 shows a sectional detail of the biasing means of the device.

Springs 4 are contained into a water-tight chamber 40 for each annular sliding element 10 and 20, which water-tight chamber is made by two sealing rings 50 and 51 for each annular sliding element 10 and 20.

The sealing rings 50 and 51 have such an arrangement so as to create an elastic damping system.

The sealing rings 50 and 51 are positioned in dedicated grooves provided in each annular sliding element 10 and 20.

It is important to note that also the calibrating pins 8 are protected inside the water-tight chambers 40.

Each annular sliding element 10 and 20 has a step-like radial enlargement such that a cylindrical section having a smaller radius is connected to a cylindrical section having a greater radius by a connecting surface lying on a plane substantially perpendicular to the axis of rotation R.

The inner walls of the stationary part 1 and of the rotary part 2 have profiles that mate with that of the annular sliding element 10 and 20, with a cylindrical section having a greater radius and a cylindrical section having a smaller radius connected by a connecting surface.

The springs 4 are housed in one or more seats provided in said surface connecting the stationary part 1 and the rotary part 2, which seats extend in a direction parallel to the axis of rotation R and such springs 4 are engaged with the connecting surface of the annular sliding element 10 and 20.

Two sealing rings 50 and 51 are provided for each annular sliding element 10 and 20, in the section with the smaller radius and the section with the greater radius respectively, which have a sealing effect on the section with the greater radius and the section with the smaller radius respectively of the stationary part 1 and the rotary part 2.

## Claims

1. A mechanical seal device for a drive shaft extending through an opening in the hull of a watercraft, said device being adapted to prevent leakage of water into said hull through said opening, said drive shaft being rotatable about an axis of rotation (R) that coincides with its longitudinal axis,
which device comprises a stationary part (1) couplable to said hull and a rotary part (2), rotatably coupled to said stationary part (1) and integrally connected to said drive shaft,
the stationary part (1) and the rotary part (2) being provided with a stationary annular sliding element (10) and a rotary annular sliding element (20) respectively, said annular sliding elements (10, 20) are each provided with a flat contact face (100, 200) and the two contact faces (100, 200) being in coplanar relationship and in contact with each other,
**characterized in that**
both said stationary part (1) and said rotary part (2) are provided with biasing means for urging said stationary annular sliding element (10) and said rotary annular sliding element (20) respectively towards each other,
said biasing means being contained in water-tight chambers (40) formed by at least two sealing rings (50, 51) for each annular sliding element (10, 20),
one or more calibrating pins (8) being provided, which are insertable into one or more threaded seats (80) provided in said stationary part (1) and/or said rotary part (2), which pins (8) project to a predetermined length in their coupled state and fitting into corresponding seats (81) formed in said rotary annular sliding element (20) and/or in said stationary annular sliding element (10), such that said calibrating pins (8) act as limit stops for the movements of said rotary annular sliding element (20) toward said rotary part (2) and/or of said stationary annular sliding element (10) toward said stationary part (1) respectively.

2. A device as claimed in claim 1, wherein said biasing means are composed of one or more springs (4).

3. A device as claimed in claim 2, wherein said one or more springs (4) are equi-angularly spaced apart, with respect to said axis of rotation (R).

4. A device as claimed in claim 1, wherein said at least two sealing rings (50, 51) are in such arrangement as to create an elastic damping system.

5. A device as claimed in claim 4, wherein each annular sliding element (10, 20) has a step-like radial enlargement such that a cylindrical section having a smaller radius is connected to a cylindrical section having a greater radius by a connecting surface lying on a plane substantially perpendicular to the axis of rotation (R), the inner walls of said stationary part (1) and said rotary part (2) having profiles that mate with that of the annular sliding element (10, 20), with a cylindrical section having a greater radius and a cylindrical section having a smaller radius connected by a connecting surface, said biasing means being composed of one or more springs (4) housed in one or more seats formed in said surface connecting the stationary part (1) and the rotary part (2), which seats extend in a direction parallel to the axis of rotation (R), said springs (4) being engaged with the connecting surface of the annular sliding element (10, 20), and the two sealing rings (50, 51) being provided for each annular sliding element (10, 20), in the section with the smaller radius and the section with the greater radius respectively, which have a sealing effect on the section with the greater radius and the section with the smaller radius respectively of the stationary part (1) and the rotary part (2).

6. A device as claimed in claim 1, wherein the said sealing rings (50, 51) are positioned in dedicated grooves provided in each annular sliding element (10, 20).

7. A device as claimed in claim 1, wherein said calibrating pins (8) are adjustable, so that they can be introduced into said threaded seats (80) so to project to a predetermined length.

8. A mechanical seal device for a drive shaft extending through an opening in the hull of a watercraft, said device being adapted to prevent leakage of water into said hull through said opening, said drive shaft being rotatable about an axis of rotation (R) that coincides with its longitudinal axis,
which device comprises a stationary part (1) couplable to said hull and a rotary part (2), rotatably coupled to said stationary part (1) and integrally connected to said drive shaft,
the stationary part (1) and the rotary part (2) being provided with a stationary annular sliding element (10) and a rotary annular sliding element (20) respectively, which annular sliding elements (10, 20) are each provided with a flat contact face (100, 200) and the two contact faces (100, 200) being in coplanar relationship and in contact with each other,
**characterized in that**
said stationary part is provided with an annular groove (3) which is open toward the surface of said stationary part (1) that bears against the inner wall of the hull, and means for filling said annular groove (3) with liquid and solidifiable seal material,
wherein said means for filling said groove (3) comprise an injection hole (30) for said seal material and an air vent hole (31), which holes (30, 31) extend from said annular groove (3) and go into the sidewall of said stationary part (1).

9. A mechanical seal device for a drive shaft extending through an opening in the hull of a watercraft, said device being adapted to prevent leakage of water into said hull through said opening, said drive shaft being rotatable about an axis of rotation (R) that coincides with its longitudinal axis,
which device comprises a stationary part (1) couplable to said hull and a rotary part (2), rotatably coupled to said stationary part (1) and integrally connected to said drive shaft,
the stationary part (1) and the rotary part (2) being provided with a stationary annular sliding element (10) and a rotary annular sliding element (20) respectively, which annular sliding elements (10, 20) are each provided with a flat contact face (100, 200) and the two contact faces (100, 200) being in coplanar relationship and in contact with each other,
**characterized in that**
said rotary part (2) has water circulation means for circulating the water that flows into the device,
wherein said rotary part (2) is provided with a seal (52) which is designed to contact said drive shaft for preventing leakage of water along said drive shaft in a direction opposite to the opening in the hull, said water circulation means being composed of a plurality of axial slots or recesses (6) provided in the inner wall of said rotary part (2), in the area that extends from said seal (52) toward the opening of the hull.

10. A mechanical seal device for a drive shaft extending through an opening in the hull of a watercraft, said device being adapted to prevent leakage of water into said hull through said opening, said drive shaft being rotatable about an axis of rotation (R) that coincides with its longitudinal axis,
which device comprises a stationary part (1) coupable to said hull and a rotary part (2), rotatably coupled to said stationary part (1) and integrally connected to said drive shaft,
the stationary part (1) and the rotary part (2) being provided with a stationary annular sliding element (10) and a rotary annular sliding element (20) respectively, which annular sliding elements (10, 20) are each provided with a flat contact face (100, 200) and the two contact faces (100, 200) being in coplanar relationship and in contact with each other,
**characterized in that**
said rotary part (2) is surrounded by a centering sleeve (9) alternatively removably couplable to the stationary part (1) and to the rotary part (2), a seal (53) being provided between the centering sleeve and the rotary part such that said centering sleeve (9), in the condition coupled to the stationary part (1), becomes integral therewith, whereas the rotary part (2) is rotatable within said centering sleeve (9) and the sealing between the rotary part (2) and the centering sleeve (9) coupled to the stationary part is performed by said seal 53.

11. A device as claimed in claim 10, wherein said centering sleeve (9) has one or more threaded seats with one or more grub screws fitted therein, one or more corresponding seats for receiving said grub screws being provided in said stationary part (1).

12. A device as claimed in claim 10, wherein said centering sleeve is alternatively removably couplable to the rotary part (2), said centering sleeve (9) having one or more threaded seats with one or more grub screws fitted therein, one or more corresponding seats for receiving said grub screws being provided in said rotary part (1).

13. A device as claimed in claim 1, **characterized in that** it has the characteristics as claimed in one or more of claims 2 to 12.

## Patentansprüche

1. Eine mechanische Dichtungsvorrichtung, die sich über eine Öffnung im Rumpf eines Wasserfahrzeuges erstreckt, diese Vorrichtung ist so angepasst, dass sie das Eindringen von Wasser in den Rumpf durch die genannte Öffnung verhindert, die Antriebswelle ist um eine Rotationsachse (R) drehbar, die mit ihrer Längsachse übereinstimmt,
diese Vorrichtung umfasst ein stationäres Teil (1), das mit dem Rumpf verkuppelt ist, und ein drehendes Teil (2), das drehbar mit dem stationären Teil (1) verkuppelt und einstückig mit der Antriebswelle verbunden ist,
das stationäre Teil (1) und das drehende Teil (2) sind mit einem stationären ringförmigen Gleitelement (10) bzw. einem drehenden ringförmigen Gleitelement (20) versehen, diese ringförmigen Gleitelemente (10, 20) sind jeweils mit einer flachen Kontaktfläche (100, 200) und zwei Kontaktflächen (100, 200) versehen, die in komplanarer Beziehung und gegenseitiger Berührung stehen,
**dadurch gekennzeichnet, dass**
sowohl das stationäre Teil (1) als auch das drehende Teil (2) mit Vorspannmitteln versehen sind, welche das stationäre ringförmige Gleitelement (10) sowie das drehende ringförmige Gleitelement (20) jeweils zueinander drücken,
diese Vorspannmittel sind in wasserdichten Gehäusen (40) enthalten und bestehen aus mindestens zwei Dichtringen (50, 51) für jedes ringförmige Gleitelement (10, 20),
vorgesehen sind ein oder mehrere Kalibrierstifte (8), die in eine oder mehrere Gewindeaufnahmen (80) eingesetzt werden, die in dem stationären Teil (1) und/oder dem drehenden Teil (2)
vorgesehen sind, diese Stifte (8) ragen auf einer vorbestimmten Länge in ihrem gekoppelten Zustand heraus und werden in die entsprechenden Aufnahmen (81) eingepasst, die in dem drehenden ringförmigen Gleitelement (20) und/oder dem stationären ringförmigen Gleitelement (10) in der Art bestehen, dass die Kalibrierstifte (8) als Anschläge für die jeweilige Bewegungen des drehenden ringförmigen Gleitelements (20) in Richtung des drehenden Teils (2) und/oder des stationären ringförmigen Gleitelements (10) in Richtung des stationären Teils (1) fungieren.

2. Vorrichtung nach Anspruch 1, bei der die Vorspannmittel aus einer oder mehreren Federn (4) bestehen.

3. Vorrichtung nach Anspruch 2, bei der die eine oder mehreren Federn (4) mit dem gleichen Winkelabstand in Bezug auf die Rotationsachse (R) versehen sind.

4. Vorrichtung nach Anspruch 1, bei der die mindestens zwei Dichtringe (50, 51) so angeordnet sind, dass sie ein elastisches Dämpfungssystem bilden.

5. Vorrichtung nach Anspruch 4, bei der jedes ringförmige Gleitelement (10, 20) eine stufenartige radiale Erweiterung besitzt, sodass ein zylinderförmiger Abschnitt, der einen kleineren Radius hat, mit einem zylinderförmigen Abschnitt, der einen größeren Radius hat, über eine Verbindungsfläche verbunden ist, die auf einer im wesentlichen rechtwinkligen Ebene zur Rotationsachse (R) liegt, die Innenwände des stationären Teils (1) und des drehenden Teils (2), die über Profile verfügen, die mit denen des ringförmigen Elements (10, 20) verbunden werden, das einen zylinderförmigen Abschnitt mit einem größeren Radius und einen zylinderförmigen Abschnitt mit einem kleineren Radius hat, die über eine Kontaktfläche miteinander verbunden sind, die Vorspannmittel bestehen aus einer oder mehreren Federn (4) und sind in ein oder mehrere Gehäuse eingepasst, die sich auf der Verbindungsfläche befinden, welche das stationäre Teil (1) und das drehende Teil (2) verbindet, diese Gehäuse erstrecken sich parallel zur Richtung der Rotationsachse (R), die Federn (4) stehen mit der Verbindungsfläche des ringförmigen Gleitelements (10, 20) in Eingriff und die zwei Dichtringe (50, 51), die für jedes ringförmige Element (10, 20) jeweils in dem Abschnitt mit dem kleineren Radius und dem Abschnitt mit dem größeren Radius vorgesehen sind, haben eine Dichtwirkung auf den Abschnitt mit dem größeren Radius und den Abschnitt mit dem kleineren Radius des stationären Teils (1) und des drehenden Teils (2).

6. Vorrichtung nach Anspruch 1, bei der die Dichtringe (50, 51) in entsprechenden Nuten positioniert sind, die in jedem ringförmigen Gleitelement (10, 20) vorgesehen sind.

7. Vorrichtung nach Anspruch 1, bei der die Kalibrierstifte (8) derartig verstellbar sind, dass sie in die Gewindeaufnahmen (80) eingeführt werden können, um über eine vorbestimmte Länge hervorzustehen.

8. Eine mechanische Dichtungsvorrichtung, die sich über eine Öffnung im Rumpf eines Wasserfahrzeuges erstreckt, diese Vorrichtung ist so angepasst, dass sie das Eindringen von Wasser in den Rumpf durch die genannte Öffnung verhindert, die Antriebswelle ist um eine Rotationsachse (R) drehbar, die mit ihrer Längsachse übereinstimmt,
diese Vorrichtung umfasst ein stationäres Teil (1), das mit dem Rumpf verkuppelt ist, und ein drehendes Teil (2), das drehbar mit dem stationären Teil (1) verkuppelt und einstückig mit der Antriebswelle verbunden ist,
das stationäre Teil (1) und das drehende Teil (2) sind mit einem stationären ringförmigen Gleitelement (10) bzw. einem drehenden ringförmigen Gleitelement (20) versehen, diese ringförmigen Gleitelemente (10, 20) sind jeweils mit einer flachen Kontaktfläche (100, 200) und zwei Kontaktflächen (100, 200) versehen, die in komplanarer Beziehung und gegenseitiger Berührung stehen,
**dadurch gekennzeichnet, dass**
das stationäre Teil mit einer ringförmigen Nut (3), welche zur Fläche des stationären Teils (1) hin geöffnet ist, das an der Innenwand des Rumpfes anliegt, und mit Mitteln zum Füllen der ringförmigen Nut (3) mit flüssigem und verfestigbarem Dichtmaterial ausgestattet ist,
bei der die Mittel zum Füllen der Nut (3) eine Einspritzöffnung (30) für das Dichtungsmaterial und eine Belüftungsöffnung (31) beinhalten, deren Öffnungen (30, 31) sich von der ringförmigen Nut (3) bis in die Seitenwand des stationären Teils (1) erstrecken.

9. Eine mechanische Dichtungsvorrichtung, die sich über eine Öffnung im Rumpf eines Wasserfahrzeuges erstreckt, diese Vorrichtung ist so angepasst, dass sie das Eindringen von Wasser in den Rumpf durch die genannte Öffnung verhindert, die Antriebswelle ist um eine Rotationsachse (R) drehbar, die mit ihrer Längsachse übereinstimmt,
diese Vorrichtung umfasst ein stationäres Teil (1), das mit dem Rumpf verkuppelt ist, und ein drehendes Teil (2), das drehbar mit dem stationären Teil (1) verkuppelt und einstückig mit der Antriebswelle verbunden ist,
das stationäre Teil (1) und das drehende Teil (2) sind mit einem stationären ringförmigen Gleitelement (10) bzw. einem drehenden ringförmigen Gleitelement (20) versehen, diese ringförmigen Gleitelemente (10, 20) sind jeweils mit einer flachen Kontaktfläche (100, 200) und zwei Kontaktflächen (100, 200) versehen, die in komplanarer Beziehung und gegenseitiger Berührung stehen,
**dadurch gekennzeichnet, dass**
das drehende Teil (2) eine Wasserkreislaufvorrichtung für den Kreislauf des Wassers besitzt, das in die Vorrichtung fließt,
bei der das drehende Teil (2) mit einer Dichtung (52) versehen ist, die für die Verbindung mit der Antriebswelle zur Vermeidung von Eindringen des Wassers entlang der Antriebswelle in entgegengesetzter Richtung zur Öffnung im Rumpf gestaltet ist,
die Wasserkreislaufvorrichtung besteht aus einer Vielzahl von Axialschlitzen oder Ausnehmungen (6), die in der Innenwand des drehenden Teils (2) in dem Abschnitt vorgesehen sind, der sich von der Dichtung (52) bis zur Öffnung im Rumpf erstreckt.

10. Eine mechanische Dichtungsvorrichtung, die sich über eine Öffnung im Rumpf eines Wasserfahrzeuges erstreckt, diese Vorrichtung ist so angepasst, dass sie das Eindringen von Wasser in den Rumpf durch die genannte Öffnung verhindert, die Antriebswelle ist um eine Rotationsachse (R) drehbar, die mit ihrer Längsachse übereinstimmt,
diese Vorrichtung umfasst ein stationäres Teil (1), das mit dem Rumpf verkuppelt ist, und ein drehendes Teil (2), das drehbar mit dem stationären Teil (1) verkuppelt und einstückig mit der Antriebswelle verbunden ist,
das stationäre Teil (1) und das drehende Teil (2) sind mit einem stationären ringförmigen Gleitelement (10) bzw. einem drehenden ringförmigen Gleitelement (20) versehen, diese ringförmigen Gleitelemente (10, 20) sind jeweils mit einer flachen Kontaktfläche (100, 200) und zwei Kontaktflächen (100, 200) versehen, die in komplanarer Beziehung und gegenseitiger Berührung stehen,
**dadurch gekennzeichnet, dass**
das drehende Teil (2) von einer Zentrierhülse (9) umgeben ist, die wechselweise von dem stationären Teil (1) und dem drehenden Teil (2) abgetrennt bzw. mit ihm verbunden ist, eine Dichtung (53), die zwischen der Zentrierhülse und dem drehenden Teil vorgesehen ist, wenn die Zentrierhülse (9) mit dem stationären Teil verbunden ist (1), verschmilzt sie mit ihm, während das drehende Teil (2) innerhalb der Zentrierhülse (9) drehbar ist und die Dichtwirkung zwischen dem drehenden Teil (2) und der Zentrierhülse (9), die mit dem stationären Teil verbunden ist, von dieser Dichtung erbracht wird.

11. Vorrichtung nach Anspruch 10, bei der die Zentrierhülse (9) eine oder mehrere Gewindeaufnahmen mit einem oder mehreren eingepassten Gewindestiften besitzt, eine oder mehrere entsprechende Aufnahmen für die Gewindestifte sind in dem stationärem Teil vorgesehen.

12. Vorrichtung nach Anspruch 10, bei der die Zentrierhülse wechselweise von dem drehenden Teil (2) abgetrennt oder mit verbunden sein kann, die Zentrierhülse (9) verfügt über eine oder mehrere Gewindeaufnahmen mit einem oder mehreren eingepassten Gewindestiften, eine oder mehrere entsprechende Aufnahmen für die Gewindestifte sind in dem drehenden Teil (1) vorgesehen.

13. Vorrichtung nach Anspruch 1, **dadurch gekennzeichnet, dass** es Merkmale nach einem oder mehreren Ansprüchen der Ansprüche 2 bis 12 aufweist.

## Revendications

1. Dispositif d'étanchéité mécanique pour un arbre d'entraînement s'étendant à travers une ouverture dans la coque d'un navire, ledit dispositif étant apte à empêcher les fuites d'eau dans ladite coque à travers ladite ouverture, ledit arbre d'entraînement pouvant tourner autour d'un axe de rotation (R) coïncidant avec son axe longitudinal, ledit dispositif comprenant une partie fixe (1) pouvant être accouplé à ladite coque (1) et relié de façon intégrée audit arbre d'entraînement, la partie fixe (1) et la partie rotative (2) étant pourvues respectivement d'un élément coulissant annulaire fixe (10) et d'un élément coulissant annulaire rotatif (20), chacun desdits éléments coulissants annulaire (10, 20) étant pourvu d'une surface de contact plate (100, 200) et les deux surfaces de contact (100, 200) étant coplanaires et en contact l'une avec l'autre,
**caractérisé en ce que**
ladite partie fixe (1) et ladite partie rotative (2) sont pourvues de moyens élastiques pour pousser ledit élément coulissant annulaire fixe (10) et ledit élément coulissant annulaire rotatif (20) respectivement l'un vers l'autre,
lesdits moyens de sollicitation étant contenus dans des chambres étanches à l'eau (40) formées par au moins deux bagues d'étanchéité (50, 51) pour chaque élément d'étanchéité annulaire (10, 20),
une ou plusieurs goupilles de calibrage étant prévues, et pouvant être insérées dans un ou plusieurs logements filetés (80) situé dans ladite partie fixe (1) et/ou dans ladite partie rotative (2), lesdites goupilles (8) faisant sailli jusqu'à une longueur prédéterminée dans leur état accouplé et s'insérant dans ledit élément coulissant annulaire rotatif (20) et/ou dans ledit élément coulissant annulaire fixe (10) de façon que lesdites goupillent de calibrage (8) fassent fonction de butées pour les mouvements respectivement dudit élément coulissant annulaire rotatif (20) vers ladite partie rotative (2) et/ou dudit élément coulissant annulaire fixe (10) vers ladite partie fixe (1).

2. Dispositif selon la revendication 1, dans lequel lesdits moyens de sollicitation sont composés d'un ou plusieurs ressorts (4).

3. Dispositif selon la revendication 2, dans lequel lesdits un ou plusieurs ressorts (4) sont situées à des distances angulaires égales par rapport audit axe de rotation (R).

4. Dispositif selon la revendication 1, dans lequel lesdites au moins deux bagues d'étanchéité (50, 51) sont agencées de façon à créer un système d'amortissement élastique.

5. Dispositif selon la revendication 4, dans lequel chaque élément coulissant annulaire (10, 20) possède un élargissement radial à gradin, de façon qu'une section cylindrique à petit rayon soit reliée à une section cylindrique à grand rayon par une surface de liaison située sur un plan sensiblement perpendiculaire à l'axe de rotation (R), les parois intérieures de ladite partie fixe (1) et de ladite partie rotative (2) possédant des profils complémentaires à ceux de l'élément coulissant annulaire (10, 20) avec une section cylindrique à grand rayon et une section cylindrique à petit rayon relié par une surface de liaison, lesdits moyens de sollicitations étant constitués d'un ou plusieurs ressorts (4) logés dans un ou plusieurs logements formés dans ladite surface reliant la partie fixe (1) et la partie rotative (2), lesdits logements s'étendant dans une direction parallèle à l'axe de rotation (R), lesdits ressorts (4) étant engagés avec la surface de liaison de l'élément coulissant annulaire (10, 20), et les deux bagues d'étanchéité (50, 51) étant situées, pour chaque élément coulissant annulaire (10, 20) respectivement dans la section à petit rayon et dans la section à grand rayon, ayant un effet d'étanchéité respectivement sur la section à grand rayon et sur la section à petit rayon de la partie fixe (1) et de la partie rotative (2).

6. Dispositif selon la revendication 1, dans lequel lesdites baguent d'étanchéité (50, 51) sont placées dans des rainures correspondantes formées dans chaque élément coulissant annulaire (10, 20).

7. Dispositif selon la revendication 1, dans lequel lesdites goupilles de calibrage (8) sont réglables de façon à pouvoir être introduites dans lesdits logements filetés (80), en saillie de ceux-ci sur une longueur prédéterminée.

8. Dispositif d'étanchéité mécanique pour un arbre d'entraînement s'étendant à travers une ouverture dans la coque d'un navire, ledit dispositif étant apte à empêcher les fuites d'eau dans ladite coque à travers ladite ouverture, ledit arbre d'entraînement pouvant tourner autour d'un axe de rotation (R) coïncidant avec son axe longitudinal, ledit dispositif comprenant une partie fixe (1) pouvant être accouplé à ladite coque (1) et relié de façon intégrée audit arbre d'entraînement, la partie fixe (1) et la partie rotative (2) étant pourvues respectivement d'un élément coulissant annulaire fixe (10) et d'un élément coulissant annulaire rotatif (20), chacun desdits éléments coulissants annulaire (10, 20) étant pourvu d'une surface de contact plate (100, 200) et les deux surfaces de contact (100, 200) étant coplanaires et en contact l'une avec l'autre,
**caractérisé en ce que**
ladite partie fixe est pourvue d'une rainure annulaire (3) ouverte vers la surface de ladite partie fixe (1) qui vient un appui sur la paroi intérieure de la coque, et des moyens pour remplir ladite rainure annulaire (3) avec un matériau d'étanchéité liquide et solidifiable,
dans lequel lesdits moyens pour remplir ladite rainure (3) comprennent un trou d'injection (30) pour ledit matériau d'étanchéité et un trou d'aération (31), lesdits trous (30, 31) s'étendant de ladite rainure annulaire (3) jusqu'à la paroi latérale de ladite partie fixe (1).

9. Dispositif d'étanchéité mécanique pour un arbre d'entraînement s'étendant à travers une ouverture dans la coque d'un navire, ledit dispositif étant apte à empêcher les fuites d'eau dans ladite coque à travers ladite ouverture, ledit arbre d'entraînement pouvant tourner autour d'un axe de rotation (R) coïncidant avec son axe longitudinal, ledit dispositif comprenant une partie fixe (1) pouvant être accouplé à ladite coque (1) et relié de façon intégrée audit arbre d'entraînement, la partie fixe (1) et la partie rotative (2) étant pourvues respectivement d'un élément coulissant annulaire fixe (10) et d'un élément coulissant annulaire rotatif (20), chacun desdits éléments coulissants annulaire (10, 20) étant pourvu d'une surface de contact plate (100, 200) et les deux surfaces de contact (100, 200) étant coplanaires et en contact l'une avec l'autre,
**caractérisé en ce que**
ladite partie rotative (2) comporte des moyens de circulation d'eau pour faire circuler l'eau s'écoulant dans le dispositif,
dans lequel ladite partie rotative (2) est pourvue d'un joint d'étanchéité (52), conçu pour venir en contact avec ledit arbre d'entraînement pour empêcher les fuites d'eau le long dudit arbre d'entraînement dans une direction opposée à l'ouverture de la coque,
lesdits moyens de circulation d'eau étant composés d'une pluralité de fentes ou évidements axiaux (6) formés dans la paroi intérieure de ladite partie rotative (2), dans la zone s'étendant dudit joint d'étanchéité (52) vers l'ouverture de la coque.

10. Dispositif d'étanchéité mécanique pour un arbre d'entraînement s'étendant à travers une ouverture dans la coque d'un navire, ledit dispositif étant apte à empêcher les fuites d'eau dans ladite coque à travers ladite ouverture, ledit arbre d'entraînement pouvant tourner autour d'un axe de rotation (R) coïncidant avec son axe longitudinal, ledit dispositif comprenant une partie fixe (1) pouvant être accouplé à ladite coque (1) et relié de façon intégrée audit arbre d'entraînement, la partie fixe (1) et la partie rotative (2) étant pourvues respectivement d'un élément coulissant annulaire fixe (10) et d'un élément coulissant annulaire rotatif (20), chacun desdits éléments coulissants annulaire (10, 20) étant pourvu d'une surface de contact plate (100, 200) et les deux surfaces de contact (100, 200) étant coplanaires et en contact l'une avec l'autre,
**caractérisé en ce que**
ladite partie rotative (2) est entourée par une douille de centrage (9) pouvant être accouplée de façon amovible à la partie fixe (1) ou à la partie rotative (2), un joint d'étanchéité (53) étant situé entre la douille de centrage et la partie rotative de sorte que ladite douille de centrage (9), dans la condition d'accouplement à la partie fixe (1), forme une seule pièce avec celle-ci, alors que la partie rotative (2) peut tourner à l'intérieur de ladite douille de centrage (9) et l'étanchéité entre la partie rotative (2) et la douille de centrage (9) accouplée à la partie fixe est assurée par ledit joint d'étanchéité (53)

11. Dispositif selon la revendication 10, dans lequel ladite douille de centrage (9) comporte un ou plusieurs logements filetés avec une ou plusieurs vis sans tête insérées dans ceux-ci, un ou plusieurs logements correspondants pour recevoir lesdites vis sans tête étant situés dans ladite partie fixe (1).

12. Dispositif selon la revendication 10, dans lequel ladite douille de centrage (9) peut être autrement accouplée de façon amovible à la partie rotative (2), ladite douille de centrage (9) comportant un ou plusieurs logements filetés avec une ou plusieurs vis sans tête insérées dans ceux-ci, un ou plusieurs logements correspondants pour recevoir lesdites vis sans tête étant situés dans ladite partie rotative (1).

13. Dispositif selon la revendication 1, **caractérisé en ce qu'**il a les caractéristiques selon une ou plusieurs des revendications 2 à 12.
